Europäisches Patentamt

**European Patent Office**

**Office européen des brevets**

(11) Publication number: **0 021 808**

**A1**

(12) **EUROPEAN PATENT APPLICATION**

(21) Application number: **80302089.0**

(22) Date of filing: **20.06.80**

(51) Int. Cl.³: **B 66 F 9/06**
**B 62 B 1/14**

(30) Priority: **25.06.79 GB 7921965**

(43) Date of publication of application:
**07.01.81 Bulletin 81/1**

(84) Designated Contracting States:
**AT BE CH DE FR GB IT LI LU NL SE**

(71) Applicant: **Norris, Terrence William**
**19 Swan Court Flood Street**
**London S.W.3.(GB)**

(72) Inventor: **Norris, Terrence William**
**19 Swan Court Flood Street**
**London S.W.3.(GB)**

(74) Representative: **Abbie, Andrew Kenneth et al,**
**A.A. THORNTON & CO. Northumberland House 303/306**
**High Holborn**
**London, WC1V 7LE(GB)**

(54) **Lifting and transporting apparatus.**

(57) The apparatus comprises a transporting device provided with wheels (4) and also preferably with means (11) for mounting steps and/or stairs. The load is carried on a detachable padded platform which is securable to supporting means (6) which can in turn be moved along an axis of the transporting device to raise or lower the load. Means are also provided for absorbing shocks, such means may include specially adapted wheels (4) or suspension means between the means for moving the supporting means and the supporting means (6). The apparatus is particularly, suitable for transporting TV sets.

FIG.1.

EP 0 021 808 A1

Croydon Printing Company Ltd.

- 1 -

## Lifting and transporting apparatus

The present invention relates to lifting and transport apparatus which are particularly, but not exclusively, suitable for use in lifting and transporting delicate items such as electrical or electronic equipment, for example television sets.

Simple trolleys suitable for transporting heavy loads are known but such trolleys are not suitable for use with delicate and fragile loads which are easily damaged during transportation because of, for example, vibrations and shocks applied to the load during transport over bumpy ground, up and down kerbs or stairs etc. Hitherto it has been necessary to carry delicate loads by hand which has many disadvantages including the risk of back injury to a person repeatedly lifting heavy and delicate loads from the ground.

The present invention includes apparatus for transporting and lifting a load comprising a transporting device, means for supporting a detachable platform for carrying a load, means for moving the supporting means along an axis of the transporting device for raising and lowering a load carried on the platform in use, and shock absorbing means for protecting the load from shocks during transportation thereof by the apparatus.

In order that the invention may be well understood some embodiments thereof will now be described, by

- 2 -

way of example only, with reference to the accompanying drawings in which:-

Figure 1 shows a diagrammatic, perspective view of a lifting and transporting apparatus;

Figure 2 shows a diagrammatic, perspective view of another type of lifting and transporting apparatus;

Figure 3 shows a diagrammatic, perspective view with parts broken away of yet another type of lifting and transporting apparatus;

Figure 4 shows a perspective view of a detachable platform for use with any of the apparatus of Figures 1, 2 and 3; and

Figure 5 shows one form of moving means suitable for use in the lifting and transport apparatus of Figure 1 or Figure 3.

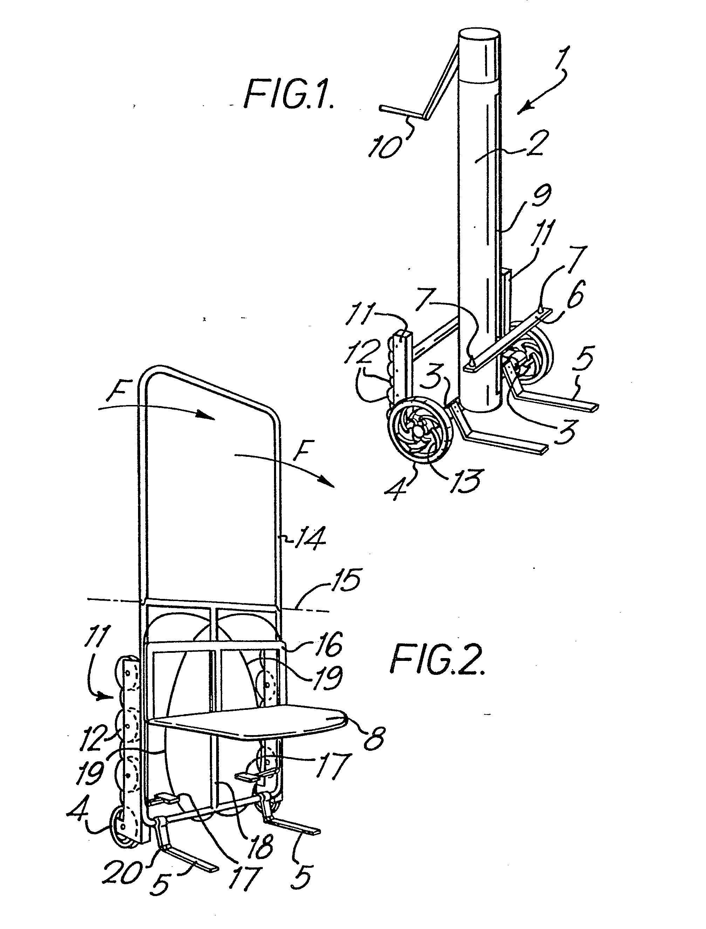

The apparatus 1 for lifting and transporting a load which is illustrated in Figure 1 comprises a transporting device having a mast 2 supported on an axle 3 having a wheel 4 mounted at either end. Feet 5 provide stability to the mast 2 when it is standing in the vertical position as shown in Figure 1. A bar 6 with lugs 7 mounted at either end thereof provides means for supporting a detachable platform 8 such as illustrated in Figure 4. The mast is provided with a longitudinal slot 9 through which the bar 6 is connected to means for moving it along a longitudinal axis of the mast 2.

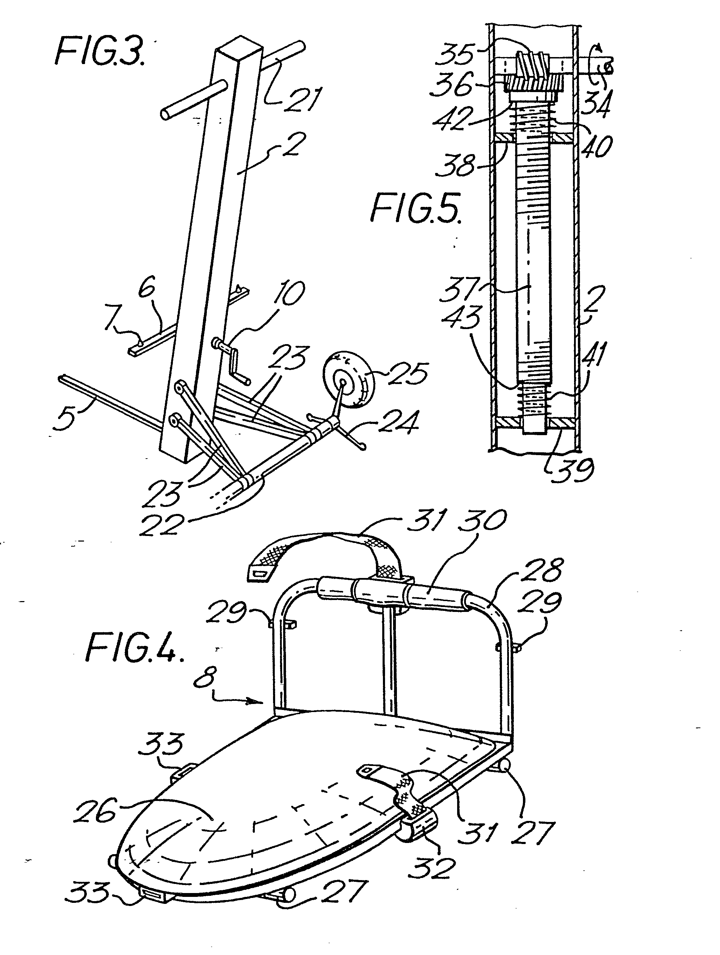

. In the illustrated apparatus the moving means is operated by a handle 10 and is of a gear operated type such as illustrated in Figure 5 and described in detail hereinafter.

A pair of races 11 are positioned one behind each wheel 4 for use in negotiating steps and/or stairs. The races 11 each comprise two rows of wheels 12, the central axes of wheels of one row being disposed inter-

- 3 -

mediate the central axes of the wheels of the other row. More rows of wheels than the two illustrated may be provided. The races 11 are shown positioned vertically as for storage but they may be inclined away from mast 2 to any one of a number of predetermined angles as most appropriate for the obstacles to be negotiated. In this apparatus means for absorbing shocks are provided both by the wheels 4 which are specially adapted by the provision of resilient angled spokes 13. Shock absorbing means may also be provided within the moving means as described more fully in relation to Figure 5. The wheels 12 may also be of the type illustrated for the main wheels 4 to further assist in shock absorbing. The wheels 4 may be provided with a solid resilient plastics outer rim or with a pneumatic tyre.

Figure 2 shows another type of apparatus in which like reference numerals designate like parts. In this apparatus the transporting device comprises a light tubular framework 14 which is foldable about axis 15 in the direction of arrows F for storage. The supporting means 16 for the detachable platform 8 is movable by a jacking device (not illustrated) located within a central shaft 18 of the framework 14. The jacking device can be operated by pressure on foot pedals 17 through Bowden type cables 19 to the jacking device. Each pressure on a pedal 17 causes the supporting means to be raised or lowered by a predetermined distance. The stabilising feet 5 are also hinged at their angles 20 so that their ends can be folded upwardly for storage. The feet 5 may alternatively be arranged to fold inwardly. Therefore once the detachable platform 8 has been removed, the feet folded upwardly and the upper part of the framework folded downwardly and the races 11 placed in the vertical position shown, the apparatus forms a compact package that can be easily stored, for example, in a vehicle carrying a number of television sets to enable the sets to be removed and transported from the vehicle to various different houses or a workshop as required.

Yet another lifting and transporting apparatus is illustrated in Figure 3. Again like reference numerals designate like parts. This apparatus is somewhat similar to that illustrated in Figure 1 having a central mast 2 with handles 21 to assist in pushing the transporting device along. Only one stabilising foot 5 is provided. The supporting means 6 is connected to mast 2 in a similar manner to that shown in Figure 1. A main axle 22 is connected to the base of mast 2 by means of a respective pair of suspension struts 23 mounted at each side of mast 2. Rubber or plastics bushes are provided at each end of the struts to assist in absorbing shocks during transport of the apparatus over rough ground. At each end of the main axle a spyder axle 24 is mounted (only one shown for clarity). The spyder axle carries three wheels 25 (only one shown). The wheels 25 may have pneumatic tyres for shock absorbing and/or be of the type illustrated for wheels 4 in Figure 1. The provision of spyder axles allows the apparatus to negotiate steps and/or stairs and other obstacles.

The transporting device may be provided with means other than those already described for negotiating steps and/or stairs, in particular sprung, axially slidable stair pads may be used.

A detachable platform 8 suitable for use with any of the above described apparatus is illustrated in Figure 4. The platform 8 has a padded base 26 which is provided with rollers 27 on its underside to allow the platform to be slid along the ground or other surface to a position when it can readily be attached to the apparatus to be used for lifting and transporting it together with any load thereon. In place of rollers a flat skid face could be provided on the underside of platform base 26. The base has a back frame 28 which may be hinged to the base to allow the platform to fold up for storage. A pair of sockets 29 are secured to the rear of back frame 28. The sockets 29 are adapted to cooperate with lugs 7 on the supporting bar 6 of the apparatus as illustrated in Figures 1 or 3, or similar lugs (not shown) on the supporting means 16 of the apparatus of Figure 2. More than one pair of sockets 29 may be provided at different positions on the back frame 28 to allow the platform 8 to be supported at different heights on the apparatus. The back frame is padded at 30 to protect the load from damage. Webbing straps 31 are secured in cylinder holders 32 mounted at the top centre of the back frame 28 and side of the base 26. The entire length of the straps may be stored in their respective cylinders 32 and extended therefrom against spring pressure to the required length for securing the straps over a load and locking their ends into sockets 33 disposed opposite the cylinders 32. The platforms 8 may be provided in various sizes suitable for the different sizes of load to be carried on. For the larger sized platform it may be preferable to provide additional straps for greater security. As an alternative (not illustrated) to the straps for securing the load to the platform a lever-operated suction pad may be utilised. The pad may conveniently be secured to the base 26 or back frame of the platform and attach, for example, to the screen of a television set.

A mechanical moving means is illustrated in more detail in Figure 5. The handle 10 illustrated in Figures 1 or 3 when rotated turns a shaft 34 which is formed as a worm gear at 35. The gear 35 meshes with another gear 36 formed at the top of a threaded central shaft 37 mounted by means of upper and lower supports 38

- 6 -

and 39 for rotation within mast 2. Rotation of shaft 34 by handle 10 causes central shaft 37 to rotate causing the supporting means 6 which are geared to shaft 37 by means not shown to be raised or lowered according to the sense of rotation of handle 10. Springs 40 and 41 disposed about central shaft 37 between respective supports 38 and 39 and shoulders 42 and 43 formed on the shaft 37, provide overload means and shock absorbing means. If a load exceeding a certain weight determined by the strength of springs 40 and 41 is placed on the platform 8 the weight is transmitted to the central shaft 37 via the supporting bar 6 and geared connection to cause the shaft 37 to move downward by compressing the springs and moving the worm gears 35 and 36 out of meshing engagement thus preventing the moving means from operating.

The moving means may also incorporate means for releasing the geared connection between the supporting bar 6 and central shaft 37 to allow the unloaded bar 6 with or without its platform 8 to move rapidly from a raised position to the bottom of its travel under gravity. The moving means need not be operated manually but could be adapted to be operated by, for example, an electric motor. A brake may also be provided for halting the downward motion of the bar 6.

Two forms of moving means have been outlined above but it will be appreciated that various other devices may be utilised for this purpose. Such devices could be manually, hydraulically, pneumatically or electro-mechanically operated as desired. In particular other contemplated forms of moving means are cable operated ratchet or friction jacks, or an arrangement of a toothed belt around pulleys one of which may be driven in either direction to provide for lifting and lowering.

The apparatus is particularly useful for loading delicate equipment such as TV sets onto and off tail gates of vehicles or workbenches. A TV set already secured to a platform can be slid on its rollers to the edge of the tail gate to present the sockets 29 attached to the back frame 28 to the operator. The apparatus is then moved close to the tail gate with the supporting means 6 or 16 raised to a suitable height so that the sockets 29 can be engaged with lugs 7. The apparatus with platform loaded thereon can be moved away from the vehicle and the platform lowered for convenience of transport and better balance if desired. The apparatus can then be used to transport the delicate equipment safely to where it is required. The equipment is easily unloaded onto the ground or a surface at any convenient height to which the platform can be raised by a reversal of the above procedure. If the apparatus is made foldable as particularly described with reference to Figure 2 then it can be carried in a vehicle along with a number of pieces of fragile equipment to be delivered to various destinations without taking up excessive space. It is particularly convenient if, when using the apparatus for such a delivery operation, the items of equipment are each loaded onto the vehicle ready secured to their platforms 8. This also helps to protect the items of equipment during their carriage in the vehicle. In order to save further effort in loading items of equipment onto their platforms the platforms may be sized such that the base can be slid beneath an item such as a TV having small feet to raise it slightly off the surface on which it stands. Therefore there is no requirement for the TV set to be manually lifted and the risk of back injury to an operator of the above described apparatus is eliminated.

foldable as particularly described with reference to Figure 2 then it can be carried in a vehicle along with a number of pieces of fragile equipment to be delivered to various destinations without taking up excessive space. It is particularly convenient if, when using the apparatus for such a delivery operation, the items of equipment are each loaded onto the vehicle ready secured to their platforms 8. This also helps to protect the items of equipment during their carriage in the vehicle. In order to save further effort in loading items of equipment onto their platforms the platforms may be sized such that the base can be slid beneath an item such as a TV having small feet to raise it slightly off the surface on which it stands. Therefore there is no requirement for the TV set to be manually lifted and the risk of back injury to an operator of the above described apparatus is eliminated.

CLAIMS:

1.　　　　Apparatus for transporting and lifting a load comprising a transporting device, means for supporting a detachable platform for carrying a load, means for moving the supporting means along an axis of the transporting device for raising and lowering a load carried on the platform in use, and shock absorbing means for protecting the load from shocks during transportation thereof by the apparatus.

2.　　　　Apparatus as claimed in claim 1, wherein the shock absorbing means comprises wheels of the transporting device which wheels are per se adapted to absorb shocks.

3.　　　　Apparatus as claimed in claim 1 or 2, wherein the transport device comprises means for negotiating steps and/or stairs.

4.　　　　Apparatus as claimed in any one of claims 1 to 3, wherein the moving means comprises overload means for preventing operation of the moving means if a load exceeding a predetermined weight is carried on the platform.

5.　　　　Apparatus as claimed in any one of claims 1 to 4, wherein the shock absorbing means comprises means incorporated with the moving means.

6.　　　　Apparatus as claimed in any one of the preceding claims, further comprising a detachable platform provided with means for mounting it to the supporting means.

7.      Apparatus as claimed in claim 6, wherein the platform has at least one belt means for securing a load to the platform.

8.      Apparatus as claimed in claim 6 or 7, wherein the platform has means for moving it along a surface independently of the transporting device.

9.      Apparatus as claimed in claim 8, wherein said platform moving means comprises at least one roller.

10.     Apparatus as claimed in any one of the preceding claims which is collapsible for storage.

FIG.1.

FIG.2.

FIG.3.

FIG.5.

FIG.4.

| | | | | |
|---|---|---|---|---|
| **European Patent Office** | **EUROPEAN SEARCH REPORT** | | Application number | EP 80 30 2089.0 |

| **DOCUMENTS CONSIDERED TO BE RELEVANT** | | | **CLASSIFICATION OF THE APPLICATION (Int. Cl.)** |
|---|---|---|---|
| Category | Citation of document with Indication, where appropriate, of relevant passages | Relevant to claim | |
| X | US - A - 3 870 177 (W.J. COBB)<br>* entire document * | 1,6,7,<br>8,9 | B 66 F 9/06<br>B 62 B 1/14 |
| | DE - C - 957 377 (MIAG)<br>* claim 1; fig. * | 1,5 | |
| | DE - U - 1 734 492 (H. HEEG)<br>* claims 1 to 3 * | 1-3 | |
| | FR - A - 1 155 109 (E. KAYE et al.)<br>* fig. 1 * | 1,2 | **TECHNICAL FIELDS SEARCHED (Int.Cl.)** |
| | US - A - 3 326 563 (L.E. WHITAKER)<br>* claim 1 * | 1-3 | B 62 B 1/00<br>B 62 B 5/00 |
| | US - A - 3 058 754 (L.E. WHITAKER)<br>* fig. 1 to 4 * | 1-3 | B 66 F 9/00 |
| A | DE - U - 1 847 949 (F.-J. REUTHER et al.)<br>* fig. 1, 2 * | 1,6 | |
| A | FR - A - 1 584 132 (C.J.P. LEBRE)<br>* fig. 1, 2 * | 1,3 | **CATEGORY OF CITED DOCUMENTS** |
| A | FR - A - 1 344 059 (C. LOCOLAS)<br>* fig. 1, 2 * | 1,3 | X: particularly relevant<br>A: technological background<br>O: non-written disclosure<br>P: intermediate document<br>T: theory or principle underlying the invention |
| A | FR - A - 1 090 648 (M. PELESTOR)<br>* fig. 1, 2 *<br>./.. | 1,10 | E: conflicting application<br>D: document cited in the application<br>L: citation for other reasons |

| X | The present search report has been drawn up for all claims | &: member of the same patent family, corresponding document |
|---|---|---|

| Place of search | Date of completion of the search | Examiner | |
|---|---|---|---|
| Berlin | 03-10-1980 | KANAL | |

EPO Form 1503.1 06.78

## EUROPEAN SEARCH REPORT

**European Patent Office**

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages | Relevant to claim | |
| A | US - A - 3 145 863 (F. DUNASKI)<br>* fig. 1, 2, 5 *<br>-- | 1 | |
| A | US - A - 3 052 323 (F.P. HOPFELD)<br>* fig. 1, 2, 19, 21 *<br>-- | 1,3,6,<br>10 | |
| A | US - A - 2 801 861 (A.H. HANSON)<br>* fig. 1, 3, 6 *<br>---- | 1,3,7 | |

TECHNICAL FIELDS SEARCHED (Int. Cl.)

EPO Form 1503.2  05.78